# EUROPEAN PATENT APPLICATION

(11) **EP 2 792 876 A1**
(43) Date of publication of application: **22.10.2014**
(21) Application number: 14165138.0
(22) Date of filing: 17.04.2014
(51) Int. Cl.: F02M 25/00

(54) **Fuel-additive supplying apparatus for supplying a fuel-additive to an engine**

(30) Priority: 19.04.2013 TW 102207230
(71) Applicant: Shianlin Frozen Foods Processing Plant Co., Ltd., Kaohsiung 80250 (TW)
(72) Inventor: Chen, Hann-Kuang, 80250 Kaohsiung (TW)
(74) Representative: Stöckeler, Ferdinand

(57) **Abstract**

A fuel-additive supplying apparatus includes: a container (2) having an upper part (20a) formed with a vapor through-hole (221); a vapor-confining conduit (24) extending in the container (2) from the upper part (20a) ; an elongate heater (31) mounted to and extending in the container (2) from the upper part (20a); and a heater controller (4) connected electrically to the elongate heater (31). The vapor-confining conduit (24) is spaced apart from and surrounds the elongate heater (31) and a bottom end (2213) of the vapor through-hole (221), so that a fuel-additive vapor generated in the vapor-confining conduit (24) may be introduced into an intake manifold (12) of an engine (1) through the vapor through-hole (221) .

## Description

This invention relates to a fuel-additive supplying apparatus for supplying a fuel-additive to an engine, more particularly to a fuel-additive supplying apparatus including a container and a vapor-confining conduit disposed in the container to confine a fuel-additive vapor therein.

Fuel additives have been used in engines for achieving goals, such as complete combustion of a liquid fuel, reduction of pollutant emission, and improvement of engine power and efficiency. One type of the fuel additives is in the form of tablet, and may be added into a body of a liquid fuel in a fuel tank of a vehicle by manually pushing tablet into the fuel tank through a fuel-feeding inlet of the fuel tank. However, since the tablet of the fuel additive is normally fed into the fuel tank manually by the vehicle user, it may occur that the amount of the liquid fuel in the fuel tank is not in an optimum condition, such that the ratio of the fuel additive to the liquid fuel in the fuel tank may be too low or too high, which results in unstable operation of the engine and risk of damaging the engine.

Therefore, an object of the present invention is to provide a fuel-additive supplying apparatus that can overcome the aforesaid drawback associated with the prior art.

According to this invention, there is provided a fuel-additive supplying apparatus adapted to be connected to an intake manifold of an engine for supplying a fuel-additive into the engine. The fuel-additive supplying apparatus comprises: a container defining an enclosed chamber that is adapted to receive a liquid fuel-additive therein, the container having an upper part that is formed with a vapor through-hole, a lower part that is disposed below and opposite to the upper part, and a vapor outlet port that is disposed at an exterior of the upper part, that is in fluid communication with the enclosed chamber through the vapor through-hole, and that is adapted to be connected to the intake manifold of the engine, the vapor through-hole having a bottom end; a vapor-confining conduit extending in the enclosed chamber from the upper part of the container toward the lower part of the container, having a top open end and a bottom opening, and defining a vapor-confining chamber, the bottom opening being disposed in the lower part of the container, and being in fluid communication with the enclosed chamber and the vapor-confining chamber; an elongate heater mounted to the upper part of the container and extending in the enclosed chamber from the upper part of the container toward the lower part of the container for heating the liquid fuel-additive in the container and vaporizing a portion of the liquid fuel-additive to generate a fuel-additive vapor in the vapor-confining chamber; and a heater controller connected electrically to the elongate heater for controlling an electric power applied to the elongate heater. The vapor-confining conduit is spaced apart from and surrounds the elongate heater so as to confine the generated fuel-additive vapor in the vapor-confining chamber. The top open end of the vapor-confining conduit has a periphery that surrounds the bottom end of the vapor through-hole, so that the generated fuel-additive vapor confined in the vapor-confining chamber may be introduced into the intake manifold of the engine through the vapor through-hole and the vapor outlet port during an intake stroke of the engine.

In drawings which illustrate an embodiment of the invention,

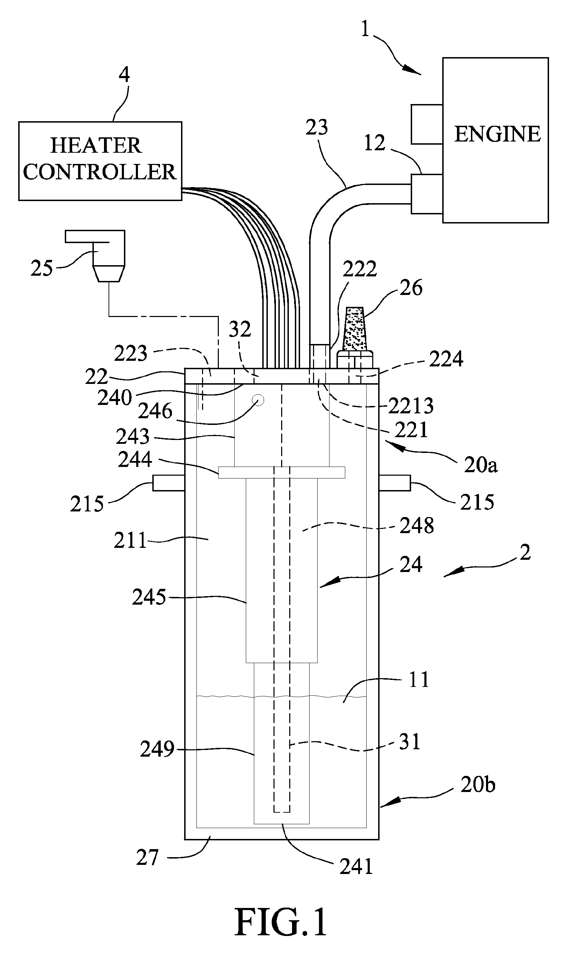

Fig. 1 is a schematic view of the preferred embodiment of a fuel-additive supplying apparatus according to the present invention.

Fig. 1 illustrates the preferred embodiment of a fuel-additive supplying apparatus according to the present invention. The fuel-additive supplying apparatus is connected to an intake manifold 12 of an engine 1 through a connecting tube 23 for supplying a fuel-additive into the engine 1. The fuel-additive may be one selected from commercially available fuel additives that are useful for achieving goals, such as complete combustion of a liquid fuel, reduction of pollutant emission, and improvement of engine power and efficiency. The fuel-additive supplying apparatus includes a cylindrical container 2, a vapor-confining conduit 24, an elongate heater 31, an air filter 26, a circuit board 32, and a heater controller 4.

The container 2 defines an enclosed chamber 211 that is adapted to receive a liquid fuel-additive 11 therein, and has an upper part 20a, a lower part 20b disposed below and opposite to the upper part 20a along an axis of the container 2, and a plurality of mounting lugs 215 disposed between the upper and lower parts 20a, 20b for mounting of the container 2 to a support (not shown) of the engine 1. The upper part 20a has a top wall 22 that confines a top side of the enclosed chamber 211 and that is formed with a vapor through-hole 221 and a feed-inlet hole 223. The lower part 20b has a bottom wall 27 that is opposite to the top wall 22 along the axis of the container 2 and that confines a bottom side of the enclosed chamber 211. The container 2 is provided with a vapor outlet port 222 that is disposed at an exterior of the top wall 22, that is in fluid communication with the enclosed chamber 211 through the vapor through-hole 221, and that is connected to the intake manifold 12 of the engine 1 through the connecting tube 23. The vapor through-hole 221 has a bottom end 2213. The liquid fuel-additive 11 is fed into the enclosed chamber 211 through the feed-inlet hole 223. A feed plug 25 is used to plug removably the feed-inlet hole 223. Theupperandlowerparts20a, 20b cooperativelydefine a continuous cylindrical surrounding wall that extends between the top wall 22 and the bottom wall 27 and that is transparent.

The vapor-confining conduit 24 extends in the enclosed chamber 211 from the top wall 22 of the upper part 20a of the container 2 toward the bottom wall 27 of the lower part 20b of the container 2, has a top open end 240 and a bottom opening 241, and defines a vapor-confining chamber 248. The bottom opening 241 is disposed adjacent to the bottom wall 27 of the container 2, and is in fluid communication with the enclosed chamber 211 and the vapor-confining chamber 248, so that the liquid fuel 11 may flow from the enclosed chamber 211 into the vapor-confining chamber 248. The vapor-confining conduit 24 is divided into a cylindrical upper section 243 that is coaxially disposed in the upper part 20a of the container 2, a cylindrical middle section 245, and a cylindrical lower section 249 that is coaxially disposed in the lower part 20b of the container 2. The upper section 243 has a diameter greater than that of the middle section 245. The lower section 249 extends downwardly from the middle section 245, and has a diameter smaller than that of the middle section 245. An annular flange 244 is disposed and extends between the upper section 243 and the middle section 245. The liquid level of the liquid fuel-additive 11 in the container 2 is preferably not higher than a top end of the lower section 249 of the vapor-confining conduit 24.

The elongate heater 31 is mounted to the top wall 22 of the upper part 20a of the container 2, and extends in the enclosed chamber 211 from the top wall 22 toward the bottom wall 27 of the lower part 20b of the container 2 for heating the liquid fuel-additive 11 in the container 2 and vaporizing a portion of the liquid fuel-additive 11 to generate a fuel-additive vapor in the vapor-confining chamber 248.

In this embodiment, the vapor-confining conduit 24 is spaced apart from and surrounds the elongate heater 31 so as to confine the generated fuel-additive vapor in the vapor-confining chamber 248. The top open end 240 of the vapor-confining conduit 24 has a periphery that surrounds the bottom end 2213 of the vapor through-hole 221, so that the generated fuel-additive vapor confined in the vapor-confining chamber 248 may be introduced into the intake manifold 12 of the engine 1 through the vapor through-hole 221 and the vapor outlet port 222 during an intake stroke of the engine 1.

The air filter 26 is disposed at the exterior of the top wall 22 of the container 2. The top wall 22 of the container 2 is further formed with an air vent hole 224 that is in fluid communication with the enclosed chamber 248 and the air filter 26. The upper section 243 of the vapor-confining conduit 24 is formed with a vent hole 246 that is disposed adjacent to the top open end 240 of the vapor-confining conduit 24 and that is in fluid communication with the vapor-confining chamber 248 and the air filter 26 through the enclosed chamber 211 and the air vent hole 224, so that the pressure in the container 2 may be maintained at the atmospheric pressure during operation of the engine 1.

The circuit board 32 is mounted to the top wall 22 of the container 2. The heater controller 4 is electrically connected to the elongate heater 31 through the circuit board 32 for controlling an electric power applied to the elongate heater 31, so that the consumption of the fuel-additive vapor in the vapor-confining chamber 248 is substantially equal to the production of the fuel-additive vapor in the vapor-confining chamber 248 during the operation of the engine 1. The flow rate (i.e., the consumption rate) of the fuel-additive vapor delivered into the intake manifold 12 may be adjusted to an optimum value by a throttle valve (not shown) or a regulator (not shown) connected to the engine 1 and the connecting tube 23, such that the ratio of the fuel-additive to the liquid fuel in a combustion chamber of the engine 1 is optimized to achieve the goals. As such, a stable high concentration of the fuel-additive vapor may be maintained in the vapor-confining chamber 248, and the fuel-additive vapor from the vapor-confining chamber 248 may be delivered into the intake manifold 12 of the engine 1 at a substantially constant flow rate during repeated engine cycles.

With the inclusion of the vapor-confining conduit 24 and the heater controller 4 in the fuel-additive supplying apparatus of the present invention, smooth and stable operation of the engine 1 can be achieved and the aforesaid unstable operation of the engine as encountered in the prior art can be overcome.

## Claims

1. A fuel-additive supplying apparatus adapted to be connected to an intake manifold (12) of an engine (1) for supplying a fuel-additive into the engine (1) , said fuel-additive supplying apparatus **characterized by**:
a container (2) defining an enclosed chamber (211) that is adapted to receive a liquid fuel-additive (11) therein, said container (2) having an upper part (20a) that is formed with a vapor through-hole (221), a lower part (20b) that is disposed below and opposite to said upper part (20a), and a vapor outlet port (222) that is disposed at an exterior of said upper part (20a), that is in fluid communication with said enclosed chamber (211) through said vapor through-hole (221), and that is adaptedtobe connected to the intakemanifold (12) of the engine (1), said vapor through-hole (221) having a bottom end (2213);
a vapor-confining conduit (24) extending in said enclosed chamber (211) from said upper part (20a) of said container (2) toward said lower part (20b) of said container (2), having a top open end (240) and a bottom opening (241), and defining a vapor-confining chamber (248), said bottom opening (241) being disposed in said lower part (20b) of said container (2), and being in fluid communication with said enclosed chamber (211) and said vapor-confining chamber (248);
an elongate heater (31) mounted to said upper part (20a) of said container (2) and extending in said enclosed chamber (211) from said upper part (20a) of said container (2) toward said lower part (20b) of said container (2) for heating the liquid fuel-additive (11) in said container (2) and vaporizing a portion of the liquid fuel-additive (11) to generate a fuel-additive vapor in said vapor-confining chamber (248); and
a heater controller (4) connected electrically to said elongate heater (31) for controlling an electric power applied to said elongate heater (31);
said vapor-confining conduit (24) being spaced apart from and surrounds said elongate heater (31) so as to confine the generated fuel-additive vapor in said vapor-confining chamber (248); and
said top open end (240) of said vapor-confining conduit (24) having a periphery that surrounds said bottom end (2213) of said vapor through-hole (221), so that the generated fuel-additive vapor confined in said vapor-confining chamber (248) may be introduced into the intake manifold (12) of the engine (1) through said vapor through-hole (221) and said vapor outlet port (222) during an intake stroke of the engine (1).

2. The fuel-additive supplying apparatus of claim 1, characterizedinthatsaidvapor-confiningconduit (24) isformedwithaventhole (246) thatisdisposedadjacent to said top open end (240) of said vapor-confining conduit (24) and that is in fluid communication with said enclosed chamber (211) and said vapor-confining chamber (248).

3. The fuel-additive supplying apparatus of claim 2, further **characterized by** an air filter (26) that is disposed at the exterior of said upper part (20a) of said container (2), said upper part (20a) of said container (2) being further formed with an air vent hole (224) that is in fluid communication with said enclosed chamber (211) and said air filter (26).

4. The fuel-additive supplying apparatus of any one of claims 1 to 4, further **characterized by** a circuit board (32) mounted to said upper part (20a) of said container (2), said heater controller (4) being electrically connected to said elongate heater (31) through said circuit board (32) for controlling the electric power applied to said elongate heater (31), so that the consumption of the fuel-additive vapor in said vapor-confining chamber (248) is substantially equal to the production of the fuel-additive vapor in said vapor-confining chamber (248) during the operation of the engine (1).
